# EUROPEAN PATENT APPLICATION

(11) **EP 4 840 280 A1**
(43) Date of publication of application: **18.11.2026**
(21) Application number: 26168238.9
(22) Date of filing: 26.03.2026
(51) Int. Cl.: A01C 7/10, A01C 7/20, A01C 7/04

(54) **SYSTEM FOR OBTAINING PROPERTIES OF SEED BEING PLANTED DURING A PLANTING OPERATION AND METHOD OF OPERATING SUCH SYSTEM**

(30) Priority: 12.05.2025 US 202519205189
(71) Applicant: Deere & Company, Moline, IL 61265 (US)
(72) Inventor: Dhapse, Dilip, 68163 Mannheim (DE); Bhansari, Veer, 68163 Mannheim (DE)
(74) Representative: Reichert, Christian

(57) **Abstract**

A system for obtaining properties of seed (56) being planted during a planting operation, comprising: a row unit (16) to deposit a plurality of seeds in a furrow; an image capture sensor (46) to capture a plurality of images of at least one or more of the plurality of seeds being deposited in the furrow; and a controller (100) communicatively coupled to the row unit and image capture sensor to receive input (110) from the row unit and the image capture sensor, the controller configured to determine from the input an orientation of each seed of the plurality of seeds; wherein, the controller is configured to compare the orientation of a first seed of the plurality of seeds to an allowable threshold and adjust the row unit if the orientation of the first seed is not within the allowable threshold. Furthermore, a method of operating such system is disclosed.

## Description

The present disclosure relates to systems and methods for agricultural machines, in particular, to obtaining properties of seed being planted during a planting operation.

### BACKGROUND

There is a wide variety of different types of agricultural machines that apply material to an agricultural field. Some agricultural machines include sprayers, tillage machines with side dressing bars, air seeders, and planters that have row units.

As one example, a row unit may be mounted to a planter with a plurality of other row units. The planter may be towed by a tractor over soil where seed is planted in the soil using the row units. The row units on the planter follow the ground profile and may dispense seed into a furrow produced by the row unit.

### SUMMARY

The present disclosure may include one or more of the following features and combinations thereof.

One implementation of a method of obtaining properties of seed being planted during a seed planting operation is provided. The method includes performing a planting operation with an agricultural machine by forming a furrow in soil and releasing one or more seeds in the furrow, receiving input by a controller from row unit of the agricultural machine, processing the input by the controller, detecting a first orientation by the controller of a first seed of the one or more seeds in the furrow from the input, comparing the first orientation of the first seed to an allowable threshold, adjusting, by the controller, the row unit when the orientation of the first seed is not within the allowable threshold, and controllably releasing a second seed from the agricultural machine into the furrow at a second orientation after adjusting the row unit.

One example of this implementation includes adjusting the allowable threshold when the first orientation of the first seed is within the allowable threshold. Another example of this implementation includes wherein adjusting the row unit includes adjusting a rotational speed of an endless member of a seed delivery system of the row unit. Yet another example of this implementation includes wherein adjusting the row unit includes adjusting a rotational speed of a seed disk of a seed meter of the row unit.

In another example of this implementation, the method further includes comparing the second orientation of the second seed to the allowable threshold and adjusting, by the controller, the row unit when the second orientation of the second seed is not within the allowable threshold. In another example of this implementation, adjusting the row unit includes adjusting a rotational speed of a seed disk of a seed meter of the row unit and adjusting a rotational speed of an endless member of a seed delivery system of the row unit.

In another example of this implementation, receiving input includes receiving image input from an image capture sensor. In another implementation, receiving input includes receiving GPS input from a GPS device. Another example of this implementation includes determining, by the controller, volumetric information of the furrow from the input. Yet another example includes determining, by the controller, a first depth of the first seed in the furrow from the input.

In another example of this implementation further includes generating a seed map from the input received by the controller, the seed map including a first location of the first seed and the first orientation of the first seed in the furrow and a second location and the second orientation of the second seed in the furrow. In another part of this example, the controller determines a first seed depth of the first seed in the furrow and a second seed depth of the second seed in the furrow, the seed map further including the first seed depth and the second seed depth of the one or more seeds. In another example of this implementation, detecting the first orientation of the first seed includes detecting the first orientation of the first seed using at least one image processing algorithm, machine learning algorithm or computer vision algorithm.

Another implementation is a method of obtaining properties of seed being planted during a seed planting operation is provided. The method includes, performing a planting operation with a row unit by releasing a plurality of seeds into a furrow, capturing one or more images with an image capture sensor of at least one seed of the plurality of seeds, detecting, by a controller, an orientation of the one seed of the plurality of seeds from the one or more images, comparing the orientation to an allowable threshold, operating the row unit at a first setting when the orientation is within the allowable threshold, adjusting the row unit when the orientation is not within the allowable threshold, and controllably releasing a second seed from the row unit to control an orientation of the second seed as it is released into the furrow.

One example of this implementation further includes using at least one computer vision, image processing, or machine learning algorithm to detect the orientation of the one seed of the plurality of seeds from the one or more images.

Another implementation is a system for obtaining properties of seed being planted during a planting operation. The system includes a row unit configured dispense a plurality of seeds into a furrow formed in a ground, an image capture sensor configured to capture a plurality of images of the furrow and one or more of the plurality of seeds being dispensed in the furrow, and a controller communicatively coupled to the image capture sensor, wherein the controller is configured to receive input from the row unit and the image capture sensor and determine, from the input, an orientation of each of the plurality of seeds.

In an example of this implementation, the row unit includes an endless member of a seed delivery system operable at a first rotational speed when the orientation of the first seed within the allowable threshold and operable at a second rotational speed when the orientation of the first seed is outside the allowable threshold, wherein the first rotational speed is different from the second rotational speed. In another example of this implementation, the row unit includes a seed disk of a seed meter operable at a first rotational speed when the orientation of the first seed within the allowable threshold and operable at a second rotational speed when the orientation of the first seed is outside the allowable threshold, wherein the first rotational speed is different from the second rotational speed. In another example of this implementation, the controller is configured to produce a seed map including a location and the orientation for each seed. In a further example of this implementation, the seed map further includes a depth in the furrow for each seed.

The above and other features will become apparent from the following description and accompanying drawings.

### BRIEF DESCRIPTION OF THE DRAWINGS

The above-mentioned aspects of the present disclosure and the manner of obtaining them will become more apparent and the disclosure itself will be better understood by reference to the following description of the implementations of the disclosure, taken in conjunction with the accompanying drawings, wherein:
FIG. 1 is a plan view of a planter;
FIG. 2 is a side view of a row unit of the planter of FIG. 1;
FIG. 3 is an enlarged side view of a seed delivery system of the row unit of FIG. 2;

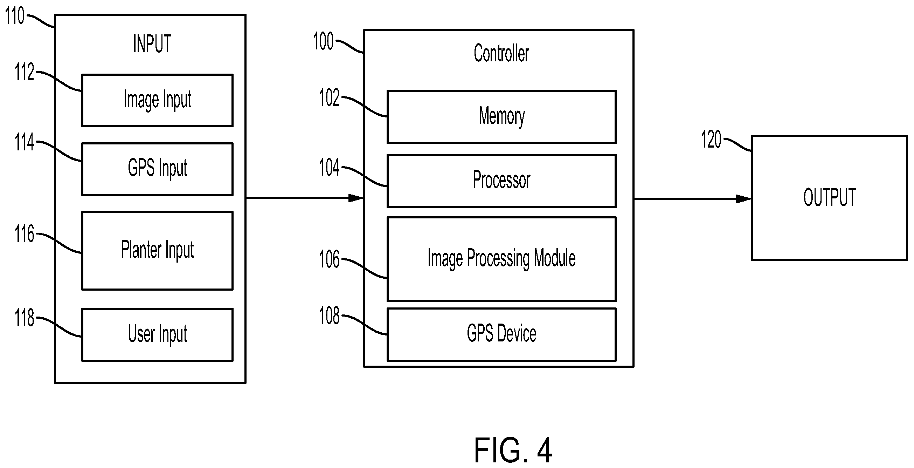

FIG. 4 is a schematic of an example implementation of the system of the present disclosure;
FIG. 5 is side view of a planting operation using the row unit of FIG. 2;
FIG. 6A is a cross-sectional view of a seed positioned in a furrow formed during the planting operation with a seed orientation within an allowable threshold;
FIG. 6B is a cross-sectional view of a seed positioned in a furrow formed during the planting operation with a seed orientation outside an allowable threshold;
FIG. 7 is an implementation of output in the form of a seed map;
FIG. 8 is a simplified schematic of the visualization system of FIG. 1 including an image capture sensor and the structured light unit;
FIG. 9 is a flow diagram of one example of a method to obtain properties of seed being planted during a planting operation; and
FIG. 10 is a flow diagram of one example of a method to obtain properties of seed being planted during a planting operation.

Corresponding reference numerals are used to indicate corresponding parts throughout the several views.

### DETAILED DESCRIPTION

For the purposes of promoting an understanding of the principles of the present disclosure, reference will now be made to the implementations described herein and illustrated in the drawings and specific language will be used to describe the same. It will nevertheless be understood that no limitation of the scope of the present disclosure is thereby intended, such alterations and further modifications in the illustrated devices and methods, and such further applications of the principles of the present disclosure as illustrated therein being contemplated as would normally occur to one skilled in the art to which the present disclosure relates.

References in the specification to "one implementation," "an implementation," "an illustrative implementation," etc., indicate that the implementation described may include a particular feature, structure, or characteristic, but every implementation may or may not necessarily include that particular feature, structure, or characteristic. Moreover, such phrases are not necessarily referring to the same implementation. It should further be appreciated that although reference to a "preferred" component or feature may indicate the desirability of a particular component or feature with respect to an implementation, the disclosure is not so limiting with respect to other implementations, which may omit such a component or feature. Further, when a particular feature, structure, or characteristic is described in connection with an implementation, it is submitted that it is within the knowledge of one skilled in the art to implement such feature, structure, or characteristic in connection with other implementations whether or not explicitly described.

Additionally, it should be appreciated that items included in a list in the form of "at least one of A, B, and C" can mean (A); (B); (C); (A and B); (B and C); (A and C); or (A, B, and C). Similarly, items listed in the form of "at least one of A, B, or C" can mean (A); (B); (C); (A and B); (B and C); (A and C); or (A, B, and C). Items listed in the form of "A, B, and/or C" can also mean (A); (B); (C); (A and B); (B and C); (A and C); or (A, B, and C). Further, with respect to the claims, the use of words and phrases such as "a," "an," "at least one," and/or "at least one portion" should not be interpreted so as to be limiting to only one such element unless specifically stated to the contrary, and the use of phrases such as "at least a portion" and/or "a portion" should be interpreted as encompassing both implementations including only a portion of such element and implementations including the entirety of such element unless specifically stated to the contrary. In the drawings, some structural or method features may be shown in certain specific arrangements and/or orderings. However, it should be appreciated that such specific arrangements and/or orderings may not necessarily be required. Rather, in some implementations, such features may be arranged in a different manner and/or order than shown in the illustrative figures unless indicated to the contrary. Additionally, the inclusion of a structural or method feature in a particular figure is not meant to imply that such feature is required in all implementations and, in some implementations, may be omitted or may be combined with other features.

"Machine learning model" refers to an algorithm or collection of algorithms that takes structured and/or unstructured data inputs and generates a prediction or result. The prediction is typically a value or set of values. A machine learning model may itself include one or more component models that interact to yield a result. As used herein, a machine learning model represents both machine learning processing and the model that is created through successive executions of the model. Typically, a model is executed successively during a training phase and after is has been successfully trained, is used operationally to evaluate new data and make predictions. It must be emphasized that the training phase may be executed a plurality's of times in order to obtain an acceptable model capable of predicting success metrics. Further, the model may discover many features. And some of these features may be quite different than the features provided as input data. Thus, the model is not known in advance and the calculations cannot be made through mental effort alone.

Moreover, the term "transverse" may also be used to describe motion or spacing that is non-parallel to a particular axis or direction. For example, an element that is described as being "movable in a direction transverse to the longitudinal axis" may move in a direction that is perpendicular to the longitudinal axis and/or in a direction oblique to the longitudinal axis. The terms are therefore not to be construed as limiting the scope of the subject matter described herein to any particular arrangement unless specified to the contrary.

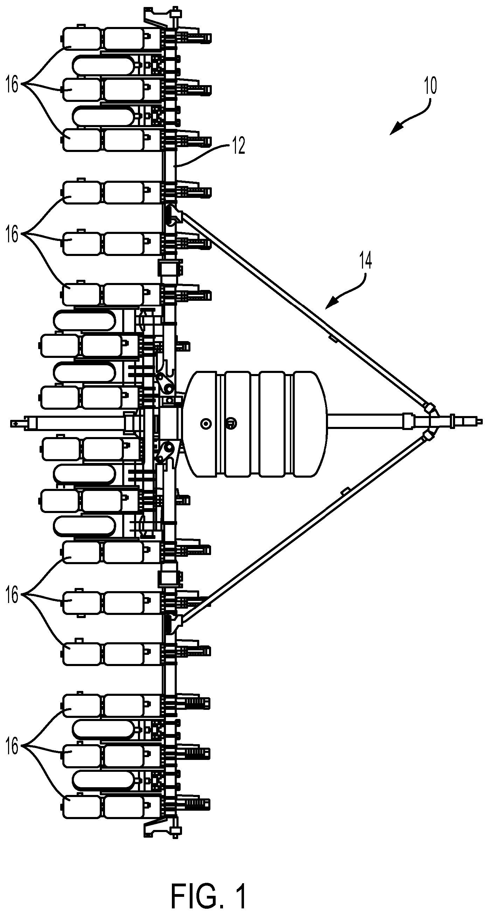

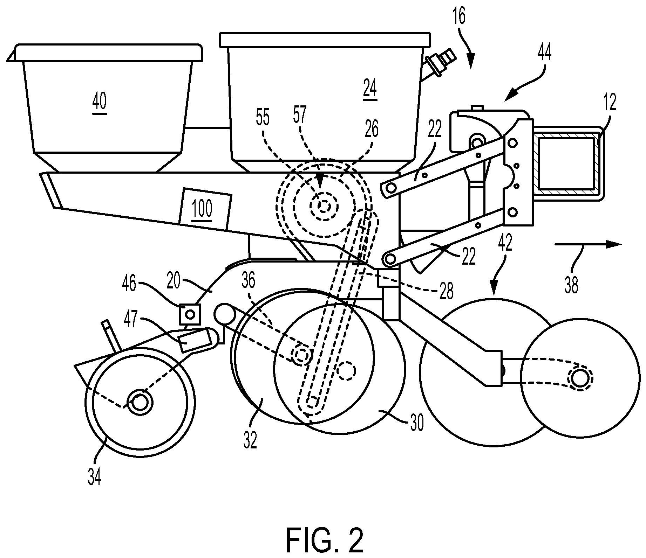

With reference to FIG. 1 an example agricultural machine in the form of a planter or seeding machine 10 is shown. A system to obtain properties of seed being planted during a planting operation of the present disclosure may include the planter 10. Planter 10 includes a tool bar 12 as part of a planter frame 14. Mounted to the tool bar are multiple planting row units 16. Row units 16 are generally similar for a given planter but there may be differences. A row unit 16 is shown in greater detail in FIG. 2. The row unit 16 is provided with a central frame member 20 connected to a parallelogram linkage 22 for mounting the row unit 16 to the tool bar 12 for up and down relative movement between the unit 16 and tool bar 12 in a known manner. Seed is stored in seed hopper 24 and provided to a seed meter 26. Seed meter 26 is of the type that uses a vacuum disk as is well known to meter the seed. Other types of meters can be used as well. From the seed meter 26, the seed is carried by a delivery system 28 into a planting furrow, or trench, formed in the soil by furrow openers 30. Gauge wheels 32 control the depth of the furrow. Closing wheels 34 close the furrow over the seed. The gauge wheels 32 are mounted to the frame member 20 by arms 36. The toolbar and row unit are designed to be move over the ground in a forward working direction identified by the arrow 38.

The row unit 16 further may include a chemical hopper 40, a row cleaner attachment 42 and a down force generator 44. The row unit 16 is shown as an example of the environment in which the delivery system of the present disclosure is used. The present disclosure can be used in any of a variety of planting machine types such as, but not limited to, row crop planters, grain drills, air seeders, etc.

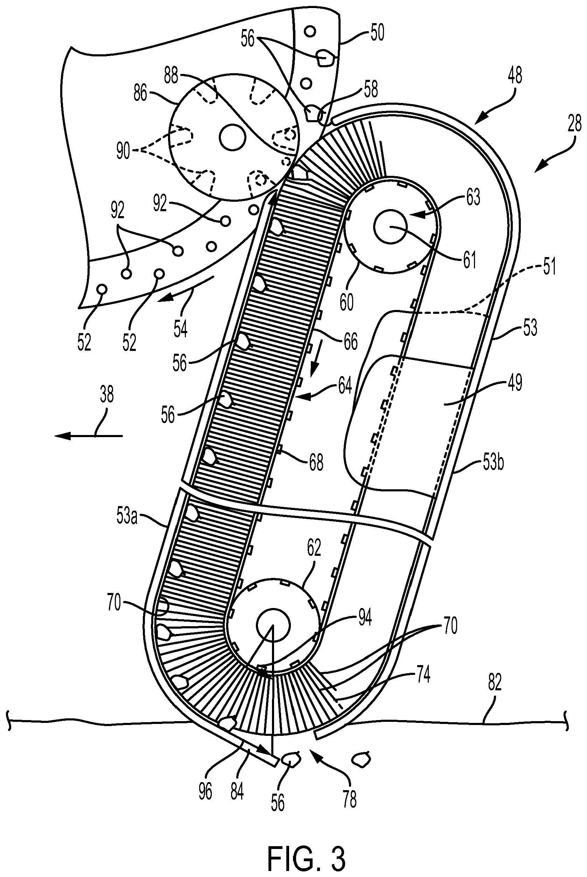

With reference to FIG. 3, the seed delivery system 28 is shown in greater detail. Delivery system 28 includes a housing 48 positioned adjacent a seed disk 50 of the seed meter. The seed disk 50 is a generally flat disk with a plurality of apertures 52 adjacent the periphery of the disk. Seeds 56 are collected on the apertures from a seed pool and adhere to the disk by air pressure differential on the opposite sides of the disk 50 in a known manner. The disk may have a flat surface at the apertures 52 or have seed cells surrounding the apertures 52. The disk rotates clockwise as viewed in FIG. 3 as shown by the arrow 54. The disk may rotate by an output shaft, for example, an output shaft 55 of a motor 57. A rotational speed of the disk 50 may be set from the rotational speed of the output shaft 55 of the motor 57. The rotational speed of the disk 50 may be set to different rotational speeds. Shown at the top of FIG. 3, seeds 56 adhere or couple to the disk.

The seed delivery system housing 48 has spaced apart front and rear walls 49 and 51 and a side wall 53 therebetween. An upper opening 58 in the housing side wall 53 admits the seed from the metering disk 50 into the housing. A pair of pulleys 60, 62 are mounted inside the housing 48. The pulleys support an endless member or belt 64 for rotation within the housing. One of the pulleys is a drive pulley while the other is an idler pulley. The drive pulley may be rotated by an output shaft, for example an output shaft of a motor. In the illustrated example, the pulley 60 is rotated by output shaft 61 of motor 63. The rotational speed of the belt may be set to different rotational speeds. The rotational speed of the belt may be set by setting a rotational speed of the drive pulley or the output shaft 61 of the motor 63. The belt has a base member 66 to engage the pulleys and elongated bristles 70 extending therefrom. The bristles are joined to the base member at proximal, or radially inner, ends of the bristles. Distal, or radially outer, ends 74 of the bristles touch, or are close to touching, the inner surface 76 of the housing side wall 53. A lower housing opening 78 is formed in the side wall 53 and is positioned as close to the bottom of the seed furrow 80 as possible. As shown, the lower opening 78 is near or below the soil surface 82 adjacent the furrow. The housing side wall forms an exit ramp 84 at the lower opening 78.

Referring to the upper portion of FIG. 3, a loading wheel 86 is provided adjacent the upper opening 58. The loading wheel is positioned on the opposite side of the seeds 56 from the brush 64 such that the path of the seeds on the disk brings the seeds into a nip 88 formed between the loading wheel and the distal ends 74 of the bristles 70. At the location of the nip 88, the air pressure differential across the seed disk 50 is terminated, freeing the seed from the apertures 52 in the disk. The bottom surface of the loading wheel, facing the seed disk 50, has recesses 90 formed therein. The recesses 90 receive seed agitators 92 projecting from the seed disk 50. The moving agitators, by engagement with the recesses in the loading wheel, drive the loading wheel in a clockwise rotation.

In operation, the belt 64 is rotated in a counterclockwise direction. As the belt moves around the pulleys, the bristles will naturally open, that is, separate from one another as the distal ends of the bristles travel a larger circumferential distance around the pulleys than the inner ends of the bristle at the belt base member. This produces two beneficial effects as described below. The seeds are transferred from the seed meter to the delivery system as the seeds are brought by the disk into the nip 88. There the seeds are pinched off the seed disk between the loading wheel and the bristles 70 to remove the seed from the seed disk and seed meter. The seeds are captured or entrapped in the bristles by insertion of the seed into the bristles in a radial direction, that is from the ends of the bristles in a direction parallel to the bristle length. This occurs just as the belt path around the pulley 60 ends, when the bristle ends are closing back together upon themselves, allowing the bristles to close upon, and capture the seeds therein. As the belt continues to move, the bristles move or convey the seeds downward to the housing lower opening. The side wall 53 of the housing cooperates with the bristles 70 to hold the seed in the brush bristles as the seed is moved to the lower opening.

The lower opening 78 and the ramp 84 are positioned along the belt path around the pulley 62. The bristle distal ends thus cause the linear speed of the seeds to accelerate relative to the speed of the belt base member 66 and the housing as shown by the two arrows 94 and 96. The seeds are then propelled by the bristles over the ramp 84 and discharged through the lower opening 78 into the seed trench. The angle of the ramp 84 can be selected to produce the desired relationship between the seed vertical and horizontal speeds at discharge. The forward travel direction of the row unit is to the left in FIG. 3 as shown by the arrow 38. At the discharge, the horizontal speed of the seed relative to the ground is minimized to reduce roll of the seed in the trench.

The belt shown in FIG. 3 has relatively long bristles. As a result of the long bristles and the seed loading point being at the end of the path of the brush around the pulley 60 results in the seeds being loaded into the belt while the bristles have slowed down in speed. The bristle speed at loading is thus slower than the bristle speed at the discharge opening as the belt travels around the pulley 62. This allows in the seed to be loaded into the belt at a relatively lower speed while the seed is discharged at the lower end at a desired higher speed. As described above, it is preferred that the horizontal velocity of the seed at the discharge be equal to the forward travel speed of the planter but in the rearward direction such that the horizontal velocity of the seed relative to the ground is close to or equal to zero. The long bristles can be used to increase the speed of the seed as it travels around the pulley. However, a short bristle brush can be used as well. With a short bristle brush, there will be little acceleration in the speed of the seed as the seed travels around the pulleys. The belt will have to be driven at a speed to produce the desired horizontal velocity of the seed at the discharge. Even with a short bristle brush, the seed is still accelerated in the horizontal direction. As the belt travels around the pulley, the direction of travel of the seed changes from the predominantly vertical direction, when the seed is moved downward from the seed meter, to a predominantly horizontal direction at the discharge. This produces an acceleration of the seed velocity in the horizontal direction.

With the delivery system 28, the seed is captured by the delivery system to remove the seed from the seed meter. The seed is then moved by the delivery system to the seed discharge point where the seed is accelerated in a rearward horizontal direction relative to the housing. From the seed meter to the discharge, the seed travel is controlled by the delivery system, thus maintaining the seed spacing relative to one another.

In the implementation shown in FIG. 3, the seed disk and the front and rear walls 49, 51 of the housing 48 lie in planes that are generally parallel one another. As shown, the plane of the delivery system is generally parallel to the direction of travel of the row unit. However, the plane of the delivery system may be transverse to the direction of travel of the row unit.

As shown in FIG. 3, the side wall 53 is divided by the upper and lower openings 58, 78 into two segments, 53a and 53b. Segment 53a is between the upper and lower openings in the direction of belt travel while the segment 53b is between the lower and upper openings in the direction of belt travel. It is the gaps in the side wall 53 that form the upper and lower openings. It should be understood, however, that the delivery system will function without the segment 53b of the side wall. It is only the segment 53a that functions together with the belt bristles to deliver the seed from the meter to the seed furrow. Thus, the term "upper opening" shall be construed to mean an open area before the side wall segment 53a in the direction of belt travel and the term "lower opening" shall mean an open area after the side wall segment 53a in the direction of belt travel.

The endless member of the delivery system has been described as being a brush belt with bristles. In a broad sense, the bristles form an outer periphery of contiguous disjoint surfaces that engage and grip the seed. While brush bristles are the preferred implementation, and may be natural or synthetic, other material types can be used to grip the seed such as a foam pad, expanded foam pad, mesh pad or fiber pad.

The row unit 16 includes an image capture sensor 46 . Although one image capture sensor 46 is illustrated, additional image capture sensors may be used. In some implementations, the image capture sensor 46 may be mounted to the frame member 20. In certain implementations, the image capture sensor 46 may be positioned between the pair of closing wheels and the pair of furrow opening disks or alternatively the image capture sensor 46 is mounted between the pair of closing wheels 34 and the seed delivery system 28. In other implementations, the image capture sensor 46 may be mounted elsewhere on the row unit.

The image capture sensor 46 may capture and generate a plurality of images, for example, 2-dimensional and/or 3-dimensional images. The plurality of images may be used as image input, as described herein. Each image of the plurality of images may include a corresponding timestamp with each image, for example, using a global timestamp. In some implementations, the image capture sensor 46 may be a perception based sensor, such as a stereo camera. In some implementations, the image capture sensor 46 may be a monochrome camera or multispectral camera.

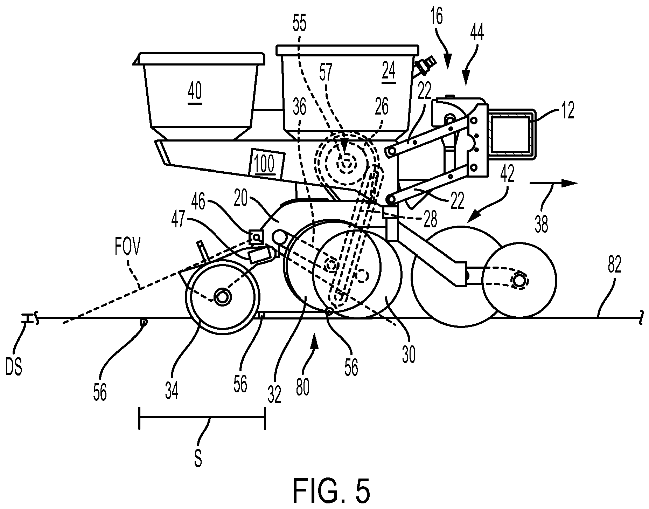

The image capture sensor 46 may have a field of view FOV. In certain implementations, the field of view FOV may be the viewable area that can be imaged via the image capture sensor 46. The field of view FOV may be wide enough to capture the furrow created by the furrow openers 30 and the area behind closing wheels 34, for the area where a seed is covered by ground soil from the closing wheels 34 as shown in FIG. 5. However, the FOV shown in FIG. 5 should not be limiting as it should be understood the angles of the FOV may differ and the FOV may be dependent on the positioning of the image capture sensor 46. It should also be understood that more than one image capture sensor 46 may be used to capture the plurality of images and/or to create a wider field of view FOV.

In certain implementations, the row unit may include a light 47. Although one light 47 is illustrated, additional lights may be used. In some implementations, the light 47 may be mounted to the row unit 16. The light 47 may include one or more light emitting diodes (LED) or broad-beamed, high intensity artificial light. The light 47 may illuminate the furrow to help capture the visual context of the trench by the image capture sensor 46. The light 47 may illuminate at least part of the trench after it has been covered by the closing wheels 34. The light 47 may illuminate the one or more seeds allowing the image capture sensor 46 to capture one or more images of a seed as it is leaving the seed delivery system and a seed as it is resting in the furrow. The light 47 may be placed anywhere on the planter to illuminate the soil surface 82 and the furrow within field of view FOV of the image capture sensor 46. In certain implementations, the light 47 may be coupled to the row unit 16. In some implementations, the light 47 may be coupled to the frame member 20.

The system further includes a controller 100. The controller 100 may include memory 102 and a processor 104. In certain implementations, the controller 100 may include an image processing module 106. In other implementations, the controller 100 may not include the image processing module 106, but may still be operatively coupled to the controller. The controller 100 may be a single device or a distributed device, and the functions of the controller 100 may be performed by hardware or by instructions encoded on computer readable medium. The controller 100 may be included within, partially included within, or completely separated from other controllers (not shown) associated with the planter 10. The controller 100 may be in communication with any sensor or other apparatus throughout the agricultural machine or work machine in connection with the agricultural machine, including through direct communication, communication over a datalink, and/or through communication with other controllers or sensors providing information to the controller 100.

The controller 100 may be placed anywhere on the planter, the row unit 16, an agricultural work machine or tractor, or any work machine that may be connected to or capable of performing one or more planting operations. In certain implementations, the controller 100 includes the image capture sensor 46.

The controller 100 is configured to receive input (110). The input (110) may include one or more image input 112, GPS input 114, or planter input 116. In some implementations, the controller 100 may be configured to receive other forms of input, for example, user input 118.

In certain implementations, the controller 100 may be operatively connected to the image capture sensor 46 to control the image capture sensor 46. In certain implementations, the image processing module 106 may be operatively connected to the image capture sensor 46 to control the image capture sensor.

In some implementations, the image capture sensor 46 is operably connected to a user interface, for example, on a screen or mobile device (not illustrated) such as a mobile phone, computer, laptop, or electronic tablet. In some implementations, the user interface may display the input from the image capture sensor. However, in other implementations the image capture sensor 46 is not connected to a user interface

As mentioned above, the image capture sensor 46 may capture a plurality of images. The plurality of images may be used as image input 112. The plurality of images may include timestamps respectively with each image, for example, using a global timestamp.

In certain implementations, the controller 100 and/or image processing module 106 may receive GPS input 114 relating to GPS locations and coordinates. In certain implementations, the controller 100 includes a GPS device 108. In some implementations, the image processing module 106 may include the GPS device 108 or be operably coupled with the GPS device 108 to enable location-based field registration and mapping of seed placement, depth estimation, and location-based images on a map from captured images of the image capture sensor 46. In some implementations, the GPS device 108 may be positioned elsewhere, for example, on the planter or work machine. The GPS input 114 may include GPS coordinates of the row unit and/or work machine at a corresponding timestamp, for example, a global timestamp. Alternatively, in other implementations, the image capture sensor 46 includes the GPS device 108.

The controller 100 and/or image processing module 106 may receive planter input 116 from the row unit 16 and/or work machine at a corresponding timestamp. For example, the planter input 116 may include the velocity of the planter, including the row unit, or work machine at a timestamp such as at a global timestamp. In certain implementations, the planter input 116 may include the rotational speed of one or more components of the planter 10 or the row unit 16. For example, the planter input 116 may include the rotational speed of the seed disk 50 and/or the rotational speed of the belt 64 of the seed delivery system. The rotational speed of the seed disk 50 may include the rotational speed of the seed disk 50 when the seed is released from the seed meter. The rotational speed of the belt 64 may include the rotational speed of the belt 64 as the seed entered the seed delivery system or is introduced to the belt 64. The rotational speed of the belt 64 may include the rotational speed of the belt as the seed exited the seed delivery system or left the belt 64. One or more sensors may generate the planter input 116. In some implementations, the one or more sensors may be included in the controller 100. In certain implementations, the one or more sensors may be positioned elsewhere on the planter and/or work machine. In certain implementations, the planter input 116 may be produced from other systems involved with performing one or more planting operations, for example a drive system of an work machine.

The controller 100 and/or the image processing module 106 may receive input in the form of user input 118. The user input 118 may come in the form of signals from a user interface.

The controller 100 is configured to produce output 120. In certain implementations, the controller 100 is able to produce real time output. For example, a first seed of the plurality of seeds may be dispensed from the seed delivery system, positioned in the furrow, covered with soil, and the controller 100 may produce output 120 before a subsequent seed is dispensed from the seed delivery system. In some implementations, the output 120 may be in the form of the controller 100 making adjustments to the row unit, as described herein, to controllably release and manipulate or control the orientation of subsequent seeds to be dispensed. In such implementations, the controller 100 may automatically make the adjustments to the row unit. In other implementations, the controller 100 may send a signal with a notification to adjust the row unit.

The controller 100 and/or image processing module 106 may use one or more computer vision, image processing, and/or machine learning algorithms. The one or more computer vision, image processing, and/or machine learning algorithms may be used to at least determine an orientation of a seed, volumetric information of a furrow, a depth of a seed in a furrow, a location of a seed, a spacing between two or more seeds, a size of the seed, or a status of the seed. The one or more computer vision, image processing, and/or machine learning algorithms may be used to compare an orientation of a seed with an allowable threshold and determine whether the seed orientation is within or outside the allowable threshold as described herein.

In certain implementations, the controller 100 and/or image processing module 106 may generate processed versions of images and/or reformatted versions thereof (e.g., to further analyze seed orientation, furrow depth, and seed depth). In particular, in some implementations, the controller 100 and/or image processing module 106 may utilize image filters (e.g., kernel-based convolution, masking, etc.), edge detection algorithms (e.g., Canny edge detection, Sobel filters, etc.), image segmentation algorithms (e.g., pyramid segmentation, watershed segmentation, etc.), blob detection algorithms, corner detection algorithms, features identification and/or matching algorithms (e.g., scale-invariant feature transform (SIFT), speeded-up robust features (SURF), etc.), morphological image processing algorithms (e.g., erosion, dilation, opening, closing, etc.), and/or other suitable algorithms useful in performing the functions described herein.

In some implementations, the controller 100 and/or image processing module 106 may remove noise from the image input 112, for example, an image via a median filter. Any type of median filter known in the art that improves results of the image may be used. Noise may refer to an unwanted disturbance, a variation, or any other type of undesirable by-product in the image. Noise may include, for example, grainy spots, colorful dots or pixels, or a variation of brightness or color information in the image. In certain implementations, the controller 100 may implement the median filter. The controller 100 and/or image processing module 106 may execute an algorithm, and the algorithm may implement median filtering on the image. In other examples, an external device may implement the median filter.

In certain implementations, the controller 100 and/or image processing module 106 may detect other disturbances from the image input 112. For example, the controller 100 and/or image processing module 106 may detect debris, dirt, or other disturbances from the image input indicating that the image input may not be usable, for example, if the image capture sensor 46 may be at least partially covered. The controller 100 and/or image processing module 106 may thus indicate that the image input may be disturbed or may be unusable. The controller 100 and/or image processing module 106 may notify an operator that image input is disturbed or may not be usable. This allows the user to inspect the image capture sensor 46 and proceed with corrective actions, for example, cleaning the image capture sensor 46. In some implementations, the controller 100 and/or image processing module 106 may send a signal to another controller or system that may automatically clean the image capture sensor.

Further, in some implementations, the controller 100 and/or image processing module 106 may leverage machine learning to detect the orientation of a seed, depth of the furrow, seed depth, and/or for other relevant purposes as described herein. For example, in some implementations, the controller 100 and/or image processing module 106 may utilize neural network algorithms, regression algorithms, instance-based algorithms, regularization algorithms, decision tree algorithms, Bayesian algorithms, clustering algorithms, association rule learning algorithms, deep learning algorithms, dimensionality reduction algorithms, and/or other suitable machine learning algorithms, techniques, and/or mechanisms. In certain implementations, the controller 100 and/or the image processing module 106 may generate point cloud data. The point cloud data may be used to perform any of the steps described herein, for example, determining the volumetric information.

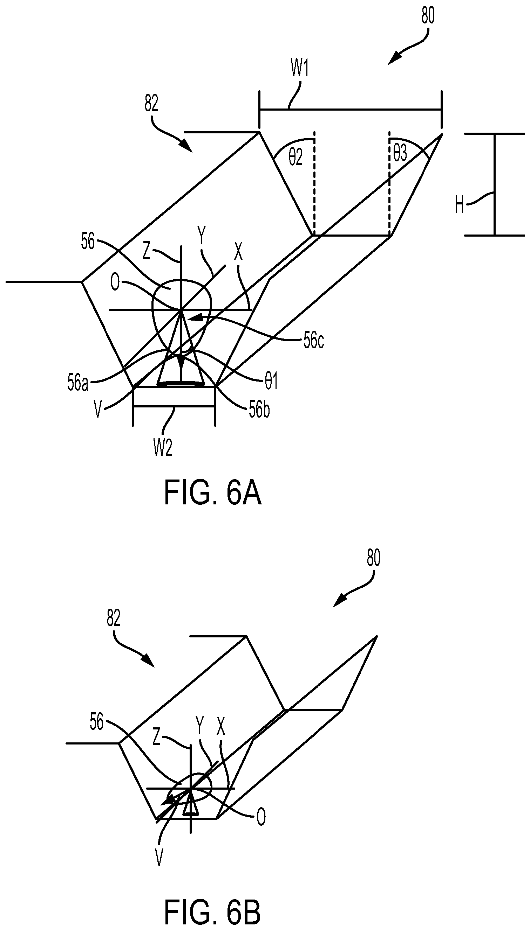

Each of the plurality of seeds may have an orientation associated with it. Referring to FIGS. 6A and 6B, the orientation for each seed may be described in reference to an origin O at the intersection of an axis X, an axis Y, and an axis Z (such as a three dimensional cartesian coordinate system). In certain implementations, the Z-axis may generally extend normal to the soil surface 82. The orientation of the seed may be defined by a vector V extending from the origin O to an edge 56a of the seed 56 in relation to the origin O. In some implementations, the vector V may be defined from the origin O to a tip cap 56b of the seed 56 on the edge 56a of the seed 56. In some implementations, the origin O may be defined at a center 56c of the seed.

In some implementations, the controller 100 and/or image processing module 106 may detect the orientation of a seed as it is falling from the row unit. The orientation of the seed when the seed is falling from the row unit but has not come to rest in the furrow may be referred to as a falling orientation.

Similarly, the controller 100 and/or image processing module 106 may detect the seed orientation as the seed has landed in the furrow. The orientation of the seed when the seed has landed and is resting in the furrow may be referred to as a resting orientation. FIG. 6A illustrates the seed 56 in a first orientation. A seed 56 being in the first orientation when resting in the furrow increases the likelihood of the seed being able to sprout and move the covering soil to penetrate out from the ground surface. Thus, the plurality of seeds having a resting orientation in the first orientation after being covered is desirable for increasing the likelihood of each seed producing a crop. FIG. 6B illustrates the seed 56 in a second orientation. The orientations may be logged or stored in the controller 100. In some implementations, the orientations may be output 120 generated by the controller 100.

The controller 100 and/or the image processing module 106 may receive input designating an allowable threshold. In certain implementations, the allowable threshold may be set by the user input 118, for example, from an operator. In certain implementations, the controller 100 and/or image processing module 106 may set the allowable threshold by default. In certain implementations, the allowable threshold may be adjusted. The allowable threshold may be adjusted, for example, by the operator. However, the allowable threshold may be adjusted automatically by the controller 100 and/or image processing module 106.

In certain implementations, the allowable threshold may be defined by a threshold angle from the origin O relative to an axis. For example, in certain implementations, the threshold angle may be defined from the origin O relative to the axis Z. However, the allowable threshold may be defined in other ways such as a first threshold angle relative to an axis and a second threshold angle relative to the axis or a second axis. In certain implementations, the allowable threshold may be defined by a threshold angle relative to a plane. As shown in FIGS. 6A and 6B, the allowable threshold is defined by a threshold angle Θ2 relative to the axis Z, thus illustrating the allowable threshold with a cone. The threshold angle Θ2 may be any angle. In certain implementations, the threshold angle Θ2 may be approximately 5° or less. In certain implementations, the threshold angle Θ2 may be approximately 10° or less. In certain implementations, the threshold angle Θ2 may be about 15° or less. In some implementations, the threshold angle Θ2 may be approximately 0°.

In certain implementations, the controller 100 and/or the image processing module 106 may compare the seed orientation. In some implementations, comparing the seed orientation may include comparing the orientation of a seed to the allowable threshold. In certain implementations, comparing the orientation of a seed to the allowable threshold may include comparing a resting orientation of the seed to the allowable threshold. An error value may be calculated for seeds with an orientation not within the allowable threshold. The error value may be defined as the difference between the orientation and the allowable threshold. For example, a seed with an orientation at 30° from the axis Z and an allowable threshold defined by a threshold angle Θ2 of 10° or less from the axis Z may have an error value of approximately 20°.

In some implementations, the controller 100 may adjust the allowable threshold. In such implementations, the controller 100 may automatically adjust the allowable threshold if the error value of one or more seeds is within or below the allowable threshold. For example, if the threshold angle is defined at 10° or less, the allowable threshold may be automatically adjusted, such as lowering the threshold angle, if the orientation of the seed is within the allowable threshold. In some implementations, the allowable threshold may automatically be returned to a starting value, for example, an initial threshold angle. For example, in one non-limiting implementation, the threshold angle may be set to 10° or less making the initial threshold angle 10°, the threshold angle may then be adjusted from about 10° to about 8°, and then be automatically adjusted back to about 10°.

For example, in certain implementations the controller 100 and/or the image processing module 106 may determine if the orientation of resting seed is within or outside the allowable threshold. Illustrations of this are shown in FIGS. 6A and 6B. For example, if the vector V of the seed is within the volume defined by the cone, the orientation may be determined to be within the allowable threshold. As shown in FIG. 6A , the orientation of the seed is within the allowable threshold as the vector V is within the volume defined by the cone.

Alternatively, the orientation of the seed may be determined to be outside of the allowable threshold. For example, the orientation of the seed may be determined to be outside the allowable threshold when the vector V of the seed is not within the volume defined by the cone. As shown in FIG. 6B , the orientation of the seed is not within the allowable threshold as the vector V is located outside of the volume defined by the cone.

The system may provide real time feedback to determine whether the row unit needs to be adjusted or not, thus controllably releasing subsequent seeds to control the orientation of the subsequent seeds. In some implementations, the controller 100 may adjust the row unit if it detects that the orientation of a dispensed seed is not within the allowable threshold. For example, the row unit may be operated at a first setting when the orientation is within the allowable threshold and may be adjusted when the orientation is not within the allowable threshold. In certain implementations, the controller 100 may not adjust the row unit until a set number of resting orientations of consecutive seeds are not within the allowable threshold. For example, the controller 100 may not adjust the row unit until three consecutive seeds have resting orientations that are not in the allowable threshold.

The row unit may be adjusted to control or manipulate the orientation for subsequent seeds to be planted. Different operational characteristics of the row unit 16 may be adjusted, for example, from a first setting to a second setting. Adjusting the row unit may change the error value of subsequent seeds to be planted. In certain implementations, at least one of the seed disk and/or the seed delivery system may be adjusted. In certain implementations, both the seed disk and the seed delivery system may be adjusted.

The seed disk may be adjusted by increasing or decreasing the rotational speed of the seed disk, for example, by increasing or decreasing the rotational speed of an output shaft of a motor coupled to the seed disk. Increasing or decreasing the rotational speed of the seed disk may cause the seed to have a different orientation when introduced to the belt of the seed delivery system.

In some implementations, adjusting the rotational speed of the seed disk may include adjusting the rotational speed of the seed disk from a first rotational speed to a second rotational speed, where the first rotational speed is different from the second rotational speed. In certain implementations, the first rotational speed may be greater than the second rotational speed. In certain implementations, the first rotational speed may be less than the second rotational speed.

In certain implementations, the seed delivery system may be adjusted. Adjusting the seed delivery system may include adjusting the belt of the seed delivery system may, for example, adjusting the rotational speed of the belt 64 of the seed delivery system. In some implementations, the belt rotational speed may be increased to help change the orientation of the seed as it is introduced to the belt and/or the orientation of the seed as the seed is leaving the seed delivery system, ultimately manipulating the orientation of subsequent seeds when positioned in the furrow. In other implementations, the belt rotational speed may be decreased to help change the orientation of the seed as it is introduced to the belt and/or the orientation of the seed as it is leaving the seed delivery system, ultimately manipulating the orientation of subsequent seeds when positioned in the furrow. The belt may be adjusted by increasing or decreasing the rotational speed of one of the pulleys 60, 62. In certain implementations, the rotational speed of the drive pulley may be adjusted to increase or decrease the rotational speed of the belt. For example, a rotational speed of an output shaft of a motor coupled to the drive pulley may be adjusted to increase or decrease the rotational speed of the belt.

The controller 100 and/or the image processing module 106 may determine volumetric information of the furrow where a seed is to be planted, for example, by using one or more computer vision, image processing, and/or machine learning algorithms. The controller 100 and/or image processing module 106 may use the input to generate the volumetric information. As shown in FIG. 6A, the volumetric information may include one or more of a height of the furrow H, a first width of the furrow W1 at the soil surface, a second width of the furrow W2 at a bottom of the furrow, an angle Θ2 of a first wall of the furrow, an angle Θ3 of a second wall of the furrow, and a volume estimation of the furrow. The volumetric information may be logged or stored in the controller 100. In some implementations, the volumetric information may be generated by the controller as output 120.

The controller 100 and/or the image processing module 106 may determine the depth of a seed DS (shown in FIG. 5) in the furrow for each seed, for example, by using one or more computer vision, image processing, and/or machine learning algorithms. In certain implementations, the controller 100 and/or the image processing module 106 may use the input received by the controller 100 and the volumetric information to determine the depth of a seed DS. The depth of a seed DS in the furrow may be the distance from the seed 56 to the soil surface 82 after the seed has been covered, for example, the distance from the tip cap 56b of the seed to the soil surface 82. The tip cap 56b may be the part of the seed 56 in which a radicle or root will extend from during germination. Knowing the depth of the seed DS for each seed is important to know how much soil is covering the seed. The greater the depth of the seed DS, the more soil there is covering the seed. Similarly, the lesser the depth of the seed DS, the less soil there is covering the seed. The depth of the seed DS for each seed may be logged or stored in the controller 100. In some implementations, the depth of the seed DS for each seed may be output 120 generated by the controller 100.

The controller 100 and/or the image processing module 106 may determine a spacing S between each seed, for example, by using one or more computer vision, image processing, and/or machine learning algorithms. The spacing may be the distance between a first seed and a second seed. The spacing S may be logged or stored in the controller 100. In some implementations, the spacing S between each seed may be output 120 generated by the controller 100.

The controller 100 and/or the image processing module 106 may determine the size of each seed, for example, by using one or more computer vision, image processing, and/or machine learning algorithms. The controller 100 and/or the image processing module 106 may further determine the status of the seed, such as whether a seed has been damaged or cracked, for example, by using one or more computer vision, image processing, and/or machine learning algorithms. The size of each seed and the status of each seed may be logged or stored in the controller 100. In some implementation, the size and status of each seed may be output 120 generated by the controller 100.

The controller 100 may store at least some of the output 120. In certain implementations, the memory 102 of the controller 100 may store or log at least some of the output 120. In some implementations, the output 120 may include the orientations of the plurality of seeds. In certain implementations, planter input 116 may be stored with the orientation of a seed. The planter input 116 may be used to determine how adjusting the row unit affects the orientation of a seed. The rotational speed of the seed disk and the rotational speed of the belt of the delivery system may be stored and used to see how the orientation of the seed is affected. For example, the rotational speed of the seed disk may be at a first rotational speed and the rotational speed of the belt may be at a second rotational speed resulting in a seed having a first orientation. The rotational speed of at least one of the seed disk and/or the belt may be adjusted resulting in a subsequent seed having a second orientation. Adjustment of the row unit may be made until subsequent seeds being planted in the planting operation have orientations within the allowable threshold. The planter input 116 along with the orientation of seeds may be used to make adjustments, such that the controller 100 may learn how to better adjust the row unit to controllably release subsequent seeds.

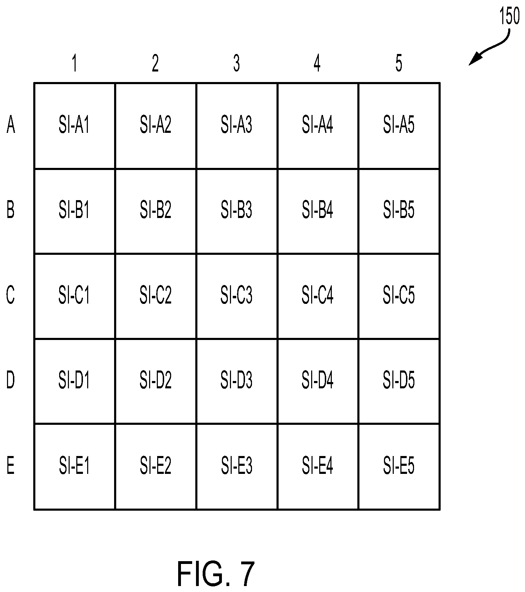

FIG. 7 illustrates a seed map 150. In certain implementations, the output 120 may include the seed map 150. In other implementations, the seed map 150 may be generated by the output 120. The seed map 150 illustrates an area in which the planter has performed the planting operation, for example, a field. The planter or row unit may make a number of furrows, for example, furrows A-E. A number of seed positions in each furrow may indicate the location of each of the plurality of seeds. For example, furrow A may have seed positions 1-5. It should be understood that each furrow may have any number of seed positions and each furrow may have the same or a different amount of seed positions as other furrows.

Each of the plurality of seeds may be designated with a label of which furrow the seed was planted in and the seed position of each furrow. For example, the third seed planted in furrow D may be categorized as seed D3. Each seed in the seed map 150 may include the stored information SI, such as the orientation, for example, the resting orientation, seed spacing S, the depth of the seed DS, the size of the seed, the seed status, and volumetric information of the furrow at each seed location. For example, the third seed planted in furrow D may have the stored information SI-D3 in the seed map. The stored information SI for each seed may include GPS information indicating the location of each seed, for example, GPS coordinates of each seed. The location of each seed may correspond with the seed map such that such that latitudinal coordinates and longitudinal coordinates may align with the furrow rows and the seed positions of the seed map 150.

The seed map 150 may be used for post processing activities, such as providing water, fertilizer, etc., to the plurality of seeds after planting. For example, the information from the seed map 150 may indicate which seeds are within the allowable threshold and which seeds are not within the allowable threshold and provide treatment during post processing activities, such as providing the seeds with resting orientations outside the allowable threshold with more fertilizer than the seeds with resting orientations within the allowable threshold. Providing extra fertilizer may help the seeds with resting orientations outside the allowable threshold to sprout and push through the covering soil.

Similarly, the information from the seed map 150 may indicate which seeds may have too much soil covering them. In certain implementations, the seeds with too much soil covering them may be given more fertilizer to help the seed sprout and push through the covering soil. The information from the seed map may also indicate which seeds have too little soil covering them. In some implementations, seeds with a too little soil covering them may be covered with more soil.

The seed map 150 may further include the planter input 116. For example, the seed map may include the rotational speed of the seed disk when the seed was released from the seed meter. The seed map may include the rotational speed of the belt. For example, the seed map may include the rotational speed of the belt as the seed entered the seed delivery system. The seed map may include the rotational speed of the belt as the seed exited the seed delivery system. This information may be used to determine the relation between the orientation of a seed and the rotational speeds of the seed disk and the belt. Understanding the relationship between the orientation of the seed and the rotational speeds of the seed desk and the seed belt allows for precise adjustments to the row unit to be made to controllably release subsequent seeds to manipulate or control the orientation of the subsequent seeds.

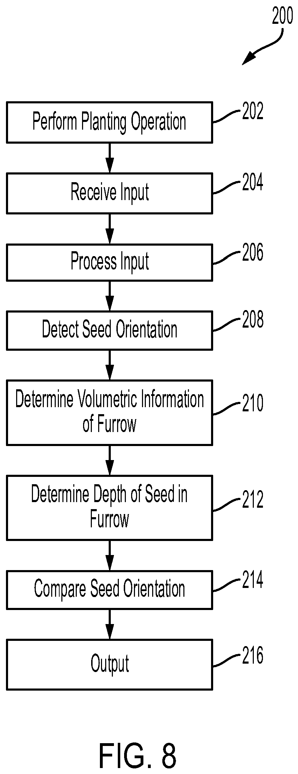

Certain systems are described herein and include examples of controller operations in various contexts of the present disclosure. Referring to FIG. 8, one implementation of a method 200 is illustrated, and the method 200 may illustrate a process of the system to obtain properties of seed being planted during a planting operation. The method 200 may include any number of blocks and the blocks may be executed in any order. In some implementations, there may be more or less blocks than those illustrated in FIG. 8.

In block 202, the system may perform a planting operation. Performing the planting operation may include performing the planting operation with an agricultural machine, for example, having a row unit. In certain implementations, the planting operation may include forming a furrow, dispensing one or more seeds to the furrow, and covering the one or more seeds with soil. In some implementations, performing the planting operation may include capturing a plurality of images with an image capture sensor 46.

According to some examples, as in block 204, the controller 100 may receive an input. In some implementations, receiving an input may include receiving image input in the form of a plurality of images from the image capture sensor 46. In some implementations, receiving input may include receiving GPS input in the form of GPS coordinates from a GPS device. In certain implementations, receiving input may include receiving planter input, for example, from one or more sensors of the system. In certain implementations, receiving input may include receiving user input, for example, user input from an operator.

In block 206, the controller 100 may process the input. In certain implementations, the image processing module 106 may process the input. In certain implementations, the controller 100 and/or the image processing module 106 may use at least one image processing algorithm to process the input. Processing the input may include generating processed images from the plurality of images. In some implementations, processing input may include removing noise from the input. Processing input may include detecting disturbances in the input.

In block 208, the controller 100 may detect seed orientation. In certain implementations, the image processing module 106 may detect seed orientation based on at least one image of the plurality of images taken by the image capture sensor 46. In some implementations, detecting seed orientation may include detecting seed orientation using at least one computer vision algorithm. In some implementations, detecting seed orientation may include to detect seed orientation using at least one machine learning algorithm.

In block 210, the controller 100 may determine volumetric information of the furrow. In certain implementations, the image processing module 106 may determine volumetric information of furrow from at least one image of the plurality of images taken by the image capture sensor 46. In some implementations, determining volumetric information of the furrow may include determining volumetric information of the furrow using at least one computer vision algorithm. In some implementations, determining volumetric information of the furrow may include determining volumetric information of the furrow using at least one machine learning algorithm. In block 212, the controller 100 may determine a depth of seed in the furrow. In certain implementations, the image processing module may determine the depth of seed in the furrow from at least one image of the plurality of images taken by the image capture sensor 46. In some implementations, determining the depth of seed in the furrow may include determining the depth of seed in the furrow using at least one computer vision algorithm. In some implementations, determining the depth of seed in the furrow may include determining the depth of seed in the furrow using at least one machine learning algorithm.

In block 214, the controller 100 may compare seed orientation. In certain implementations, the image processing module 106 may compare seed orientation between two or more seeds, or between one seed and an allowable threshold orientation. In some implementations, comparing seed orientation may include comparing seed orientation using at least one computer vision algorithm. In some implementations, comparing seed orientation may include comparing seed orientation using at least one machine learning algorithm. Comparing seed orientation may include comparing a seed orientation of a seed to an allowable threshold. In certain implementations, comparing seed orientation may further include determining whether the seed orientation is within the allowable threshold.

In block 216, the controller 100 may produce an output. In some examples, producing the output may include adjusting the row unit. In some implementations, producing the output may include sending a signal to adjust the row unit, for example, sending a signal to notify an operator to adjust the row unit. The output may include adjusting the row unit automatically via the controller 100. The output may include controllably releasing a subsequent seed from the agricultural machine or row unit to control or manipulate an orientation of the subsequent seed as it is introduced to the furrow.

In some implementations, adjusting the row unit may include adjusting the row unit when the seed orientation of the seed is not within the allowable threshold. In certain implementations, adjusting the row unit may include adjusting the row unit by adjusting at least one of the rotational speed of the seed disk and the rotational speed of the belt of the seed delivery system. In some implementations, adjusting the row unit may include adjusting a rotational speed of an output shaft of a motor of the row unit. In certain implementations, adjusting the rotational speed of the output shaft of a motor may adjust a rotational speed of a drive pulley or a rotational speed of an endless member of the seed delivery system. In certain implementations, adjusting the rotational speed of the output shaft of the motor may adjust a rotational speed of the seed disk of the seed meter. In certain implementations, the controller may use a machine learning model to adjust the row unit. For example, the controller may learn from seed orientations and planter input of previously planted seeds to better learn how to adjust the row unit. For example, the controller 100 may learn that a seed may have an orientation within the allowable threshold when the rotational speed of the seed disk is at a specific rotational speed or within a speed range and when the rotational speed of the belt is at a specific rotational speed or within a speed range.

In some implementations, the output may include adjusting both the rotational speed of the seed disk and the rotational speed of the belt. For example, the output may further include adjusting the rotational speed of the output shaft of a first motor thus adjusting a rotational speed of the seed disk of the seed meter, and adjusting the rotational speed of the output shaft of a second motor thus adjusting a rotational speed of an endless member of the seed delivery system.

Adjusting the row unit may include setting the rotational speed of the seed disk to a first rotational speed, for example, when the orientation of the seed is in a first orientation. Adjusting the row unit may include setting the rotational speed of the seed disk to a second rotational speed, for example, when the orientation of the seed is in second orientation. In certain implementations, the first rotational speed may be different than the second rotational speed. In some implementations, the first rotational speed may be greater than the second rotational speed. In some implementations, the first rotational speed may be less than the second rotational speed. In some implementations, setting the rotational speed of the seed disk may include setting a rotational speed of an output shaft of a motor coupled to the seed disk to set the speed of the seed disk.

Adjusting the row unit may include setting the rotational speed of the belt to a third rotational speed, for example, when the orientation of the seed is in a first orientation. Adjusting the row unit may include setting the rotational speed of the seed disk to a fourth rotational speed, for example, when the orientation of the seed is in a second orientation. In certain implementations, the third rotational speed may be different than the fourth rotational speed. In some implementations, the third rotational speed may be greater than the fourth rotational speed. In some implementations, the third rotational speed may be less than the fourth rotational speed. In some implementations, setting the rotational speed of the belt may include setting a rotational speed of an output shaft of a motor coupled to a drive pulley to set the rotational speed of the belt.

In some implementations, producing the output may include producing the output by generating a seed map. In certain implementations, generating a seed map may include generating a seed map including locations of the plurality of seeds. In certain implementations, generating a seed map may include generating a seed map including orientations of the plurality of seeds. In certain implementations, generating a seed map may include generating a seed map including depths of the plurality of seeds. In certain implementations, generating a seed map may include generating a seed map including the status of each of the plurality of seeds. In certain implementations, generating a seed map may include generating a seed map including spacing of the plurality of seeds. In certain implementations, generating a seed map may include generating a seed map with volumetric information at each seed location.

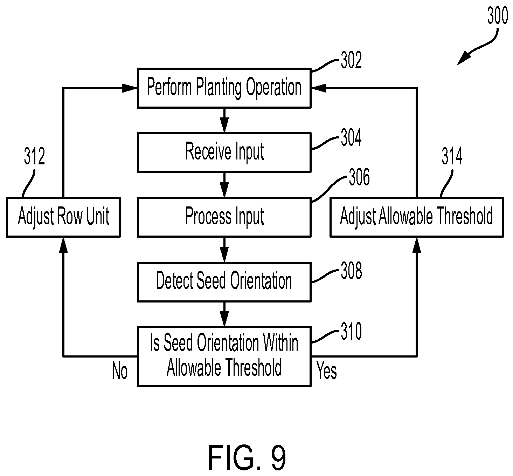

Referring to FIG. 9, one implementation of a method 300 is illustrated, and the method 300 may illustrate a process of the system to obtain properties of seed being planted during a planting operation. The method 300 may include any number of blocks and the blocks may be executed in any order. In some implementations, there may be more or less blocks than those illustrated in FIG. 9.

According to some examples, as in block 302, the system may perform a planting operation, similarly as described above with reference to block 202. Performing the planting operation may include performing the planting operation with a row unit coupled to an agricultural machine. In certain implementations, the planting operation may include creating a furrow, dispensing a seed in the furrow, and covering the seed with soil. In some implementations, performing the planting operation may include capturing a plurality of images with an image capture sensor 46.

According to some examples, as in block 304, the controller 100 may receive input, similarly as described above in block 204. In some implementations, the input may include a plurality of images from the image capture sensor 46. In some implementations, the input may include GPS input in the form of GPS coordinates. In certain implementations, the input may include planter input. In certain implementations, the input may include user input.

In block 306, the controller 100 may process the input, similar to that described above in block 206. In certain implementations, the image processing module 106 may process the input. Processing the input may include generating processed images from the plurality of images. In some implementations, processing the input may include removing noise from the input. Processing the input may include detecting disturbances in the input.

In block 308, the controller 100 may detect seed orientation similar to that described in block 208. In certain implementations, the image processing module 106 may detect seed orientation. In some implementations, to detect seed orientation may include to detect seed orientation using at least one computer vision algorithm. In some implementations, to detect seed orientation may include to detect seed orientation using at least one machine learning algorithm.

In block 310, the controller 100 may determine if the seed orientation is within the allowable threshold. In certain implementations, if the seed orientation is not within the allowable threshold, then the system may proceed to block 312. In some implementations, two or more consecutive seeds may need to be determined to not be within the allowable threshold before moving to block 312.

In block 312, adjustment of the row unit is made. Adjustment of the row unit may include at least one of adjusting the rotational speed of the seed disk and adjusting the rotational speed of the belt of the seed delivery system. In certain implementations, the adjustment to the row unit may be made by an operator. In some implementations, the adjustment to the row unit may be made automatically such as by the controller 100. Adjustment of the row unit may include adjusting the allowable threshold. For example, adjusting the row unit may include adjusting the allowable threshold by increasing a threshold angle.

Adjusting the row unit may also include setting the rotational speed of the seed disk to a first rotational speed, for example, when the orientation of the seed is in a first orientation. Adjusting the row unit may include setting the rotational speed of the seed disk to a second rotational speed, for example, when the orientation of the seed is in second orientation. In certain implementations, the first rotational speed may be different than the second rotational speed. In some implementations, the first rotational speed may be greater than the second rotational speed. In some implementations, the first rotational speed may be less than the second rotational speed.

Adjusting the row unit may include setting the rotational speed of the belt to a third rotational speed, for example, when the orientation of the seed is in a first orientation. Adjusting the row unit may include setting the rotational speed of the belt to a fourth rotational speed, for example, when the orientation of the seed is in second orientation. In certain implementations, the third rotational speed may be different than the fourth rotational speed. In some implementations, the third rotational speed may be greater than the fourth rotational speed. In some implementations, the third rotational speed may be less than the fourth rotational speed.

After executing block 312, the system may then return to block 302 to continue performing the planting operation.

In block 310 if the seed orientation is within the allowable threshold, then the system may proceed to block 314.

In block 314, the allowable threshold may be adjusted. In certain implementations, adjusting the allowable threshold may include adjusting the allowable threshold automatically by the controller 100. In certain implementations, adjusting the allowable threshold may include lowering a threshold angle. For example, the controller may automatically lower the threshold angle if an orientation of a seed is determined to be within the allowable threshold. In some implementations, two or more consecutive seeds may need to have orientations within the allowable threshold before adjusting the allowable threshold. In some examples, after executing block 314, the method 300 may continue to block 302 to continue performing the planting operation. In some implementations, the system may not perform block 314, such that the allowable threshold is not adjusted and the system may proceed to block 302 to continue performing the planting operation. In some examples, the method 300 may be repeated and the planting operation may continue and the controller 100 may continue comparing the orientation of subsequent seeds in relation to the allowable threshold. The method 300 may be applicable to any type of seed. The method 300 may continue to repeat itself until the planting operation is complete.

In this application, including the definitions below, the term "module" or the term "controller" may be replaced with the term "circuit." The term "module" may refer to, be part of, or include: an Application Specific Integrated Circuit (ASIC); a digital, analog, or mixed analog/digital discrete circuit; a digital, analog, or mixed analog/digital integrated circuit; a combinational logic circuit; a field programmable gate array (FPGA); a processor circuit (shared, dedicated, or group) that executes code; a memory circuit (shared, dedicated, or group) that stores code executed by the processor circuit; other suitable hardware components that provide the described functionality; or a combination of some or all of the above, such as in a system-on-chip.

Some or all hardware features of a module may be defined using a language for hardware description, such as IEEE Standard 1364-2005 (commonly called "Verilog") and IEEE Standard 1076-2008 (commonly called "VHDL"). The hardware description language may be used to manufacture and/or program a hardware circuit. In some implementations, some or all features of a module may be defined by a language, such as IEEE 1666-2005 (commonly called "SystemC"), that encompasses both code, as described below, and hardware description.

The term code, as used above, may include software, firmware, and/or microcode, and may refer to programs, routines, functions, classes, data structures, and/or objects. The term shared processor circuit encompasses a single processor circuit that executes some or all code from multiple modules. The term group processor circuit encompasses a processor circuit that, in combination with additional processor circuits, executes some or all code from one or more modules. References to multiple processor circuits encompass multiple processor circuits on discrete dies, multiple processor circuits on a single die, multiple cores of a single processor circuit, multiple threads of a single processor circuit, or a combination of the above. The term shared memory circuit encompasses a single memory circuit that stores some or all code from multiple modules. The term group memory circuit encompasses a memory circuit that, in combination with additional memories, stores some or all code from one or more modules.

The term memory circuit is a subset of the term computer-readable medium. The term computer-readable medium, as used herein, does not encompass transitory electrical or electromagnetic signals propagating through a medium (such as on a carrier wave); the term computer-readable medium may therefore be considered tangible and non-transitory. Non-limiting examples of a non-transitory computer-readable medium are nonvolatile memory circuits (such as a flash memory circuit, an erasable programmable read-only memory circuit, or a mask read-only memory circuit), volatile memory circuits (such as a static random access memory circuit or a dynamic random access memory circuit), magnetic storage media (such as an analog or digital magnetic tape or a hard disk drive), and optical storage media (such as a CD, a DVD, or a Blu-ray Disc).

The apparatuses and methods described in this application may be partially or fully implemented by a special purpose computer created by configuring a general purpose computer to execute one or more particular functions embodied in computer programs. The functional blocks and flowchart elements described above serve as software specifications, which can be translated into the computer programs by the routine work of a skilled technician or programmer.

The computer programs include processor-executable instructions that are stored on at least one non-transitory computer-readable medium. The computer programs may also include or rely on stored data. The computer programs may encompass a basic input/output system (BIOS) that interacts with hardware of the special purpose computer, device drivers that interact with particular devices of the special purpose computer, one or more operating systems, user applications, background services, background applications, etc.

## Claims

1. A system for obtaining properties of seed (56) being planted during a planting operation, comprising:
a row unit (16) configured to deposit a plurality of seeds (56) in a furrow formed in a ground surface;
an image capture sensor (46) configured to capture a plurality of images of at least one or more of the plurality of seeds (56) being deposited in the furrow; and
a controller (100) communicatively coupled to the row unit (16) and image capture sensor (46);
wherein, the controller (100) is configured to receive input (110) from the row unit (16) and the image capture sensor (46), the controller (100) configured to determine from the input (110) an orientation of each seed (56) of the plurality of seeds (56);
wherein, the controller (100) is configured to compare the orientation of a first seed (56) of the plurality of seeds (56) to an allowable threshold and adjust the row unit (16) if the orientation of the first seed (56) is not within the allowable threshold.

2. The system of claim 1, wherein the row unit (16) comprises:
an endless member (64) of a seed delivery system (28) operable at a first rotational speed when the orientation of the first seed (56) is within the allowable threshold and operable at a second rotational speed when the first seed (56) is outside the allowable threshold, where the first rotational speed is different from the second rotational speed; and
a seed disk (50) of a seed meter operable at a first rotational speed when the orientation of the first seed (56) is within the allowable threshold and operable at a second rotational speed when the first seed (56) is outside the allowable threshold, where the first rotational speed is different from the second rotational speed.

3. The system of claim 1 or 2, wherein the controller (100) is configured to produce a seed map (150) including a location and the orientation for each seed of the plurality of seeds (56) deposited in the furrow.

4. The system of claim 3, wherein the seed map (150) further includes a seed depth in the furrow for each seed (56) of the plurality of seeds (56) deposited in the furrow.

5. A method of obtaining properties of seed (56) being planted during a planting operation, the method comprising a system according to one of the claims 1 to 4, the method further comprising:
performing the planting operation with an agricultural machine (10) by forming a furrow in soil and releasing one or more seeds (56) in the furrow;
receiving input (110) by a controller (100) from a row unit (16) of the agricultural machine (10);
processing the input (110) by the controller (100);
detecting a first orientation by the controller (100) of a first seed (56) of the one or more seeds (56) from the input (110);
comparing the first orientation of the first seed (56) to an allowable threshold;
adjusting the row unit (16) when the first orientation of the first seed (56) is not within the allowable threshold; and
controllably depositing a second seed (56) from the agricultural machine (10) in the furrow at a second orientation after adjusting the row unit (16).

6. The method of claim 5, further comprising adjusting the allowable threshold when the first orientation of the first seed (56) is within the allowable threshold.

7. The method of claim 5 or 6, wherein the second orientation is different from the first orientation.

8. The method of one of the claims 5 to 7, further comprising:
comparing the second orientation of the second seed (56) to the allowable threshold; and
adjusting the row unit (16) when the second orientation of the second seed (56) is not within the allowable threshold.

9. The method of one of the claims 5 to 8, wherein receiving input (110) comprises receiving image input (112) from an image capture sensor (46).

10. The method of one of the claims 5 to 9, wherein receiving input (110) comprises receiving GPS input (114) from a GPS device (108).

11. The method of one of the claims 5 to 10, further comprising determining, by the controller (100), volumetric information of the furrow from the input (110).

12. The method of one of the claims 5 to 11, determining, by the controller (100), a first depth of the first seed (56) in the furrow from the input (110).

13. The method of one of the claims 5 to 12, further comprising generating a seed map (150) from the input (110) received by the controller (100), the seed map (150) including a first location and the first orientation of the first seed (56) in the furrow and a second location and the second orientation of the second seed (56) in the furrow.

14. The method of claim 13, wherein the controller (100) determines a first seed depth of the first seed (56) in the furrow and a second seed depth of the second seed (56) in the furrow, the seed map (150) including the first seed depth and the second seed depth.

15. The method of one of the claims 5 to 14, wherein detecting the first orientation of the first seed (56) comprises detecting the first orientation of the first seed (56) using at least one image processing algorithm, machine learning algorithm, or computer vision algorithm.
